# EUROPÄISCHE PATENTSCHRIFT

(11) **EP 3 619 562 B1**
(45) Veröffentlichungstag und Bekanntmachung des Hinweises auf die Patenterteilung: **20.11.2024**
(21) Anmeldenummer: 18722043.9
(22) Anmeldetag: 04.05.2018
(51) Int. Cl.: G02B 6/35, G02B 6/12, G02B 6/26

(54) **VARIABLES OPTISCHES DÄMPFUNGSGLIED**
VARIABLE OPTICAL DAMPING ELEMENT
AMORTISSEUR OPTIQUE VARIABLE

(30) Priorität: 04.05.2017 DE 102017109582
(43) Veröffentlichungstag der Anmeldung: 11.03.2020
(73) Patentinhaber: AMO GmbH, 52074 Aachen (DE)
(72) Erfinder: NEUMAIER, Daniel, 52159 Roetgen (DE); MOHSIN, Muhammad, Lahore 54770 (PK); SCHALL, Daniel, 52066 Aachen (DE)
(74) Vertreter: Patentanwälte Bauer Vorberg Kayser
(86) Internationale Anmeldenummer: PCT/EP2018/061469
(87) Internationale Veröffentlichungsnummer: WO 2018/202833

(56) Entgegenhaltungen:
- WO-A1-2013/148349
- WO-A2-2014/089454
- US-A1- 2015 194 540

## Beschreibung

Die Erfindung bezieht sich auf ein variables optisches Dämpfungsglied (variable optical attenuator).

Aus der WO 2014/089454 A2 ist ein Graphen-basierter Photodetektor bekannt. Zur Verbesserung der Effektivität des Detektors ist ein Lichtwellenleiter vorgesehen, in dessen Nähe eine Schicht Graphen angeordnet ist. Das evaneszente Feld des durch den Lichtwellenleiter gesandten Lichts kann in dem Graphen Phototräger erzeugen. Die Graphenschicht ist an zwei Enden mit einer Drain- und einer Source-Elektrode kontaktiert. Zum Beeinflussen der Fermi-Energie der Elektronen in der Graphenschicht kann eine Gate-Elektrode vorgesehen sein.

Variable optische Dämpfungsglieder (VOA) werden für die Einstellung von Pegeln eingesetzt und sind notwendig, um eine ordnungsgemäße Funktion optischer Schaltungen zu gewährleisten. Sie sind eine Hauptkomponente in z.B. der Freiraumoptik, in der integrierten Photonik und in optischen Kommunikationsnetzen. Sie finden in der Regel Anwendung bei der Simulation optischer Verbindungen, so bei der Prüfung und der Verifizierung der Leistung. Sie ermöglichen es, die Intensität des Ausgangssignals von Laserdioden gezielt zu verringern. Dadurch wird vermieden, dass die zugeordneten optischen Empfänger in einem nichtlinearen Bereich arbeiten. Sie werden auch verwendet, um die Ausgänge von optischen Verstärkern im Wellenlängenmultiplex auszugleichen, da optische Verstärker das eingehende Wellenlängenmultiplex-Signal auf der Grundlage einzelner Wellenlängen verstärken.

Laserlicht der Wellenlänge von 855 nm wird in der Regel für optische Kommunikationssysteme kurzer Reichweite verwendet. Für Dämpfungsglieder in diesem Wellenbereich wird gemäß der US 9,547,130 eine mechanische Einstellvorrichtung benutzt, bei der Lichtleiterfasern mehr oder weniger gebogen werden.

Die Dämpfungsglieder nach dem Stand der Technik haben folgende Nachteile: Im Bereich von Wellenlängen um 850 nm sind nur Dämpfungsglieder mit diskreten Komponenten bekannt, es gibt keine Ein-Chiplösungen. Manuell einstellbare Dämpfungsglieder haben erhebliche Nachteile, es muss eine Person vor Ort sein, um sie einzustellen. Der Vorteil von elektronisch einstellbaren liegt darin, dass die Dämpfung automatisch oder zumindest aus der Ferne eingestellt werden kann. Die vorhandenen Dämpfungsglieder sind relativ voluminös, sie sind nicht wirtschaftlich einsetzbar.

Hier setzt die Erfindung ein. Sie hatte es sich zur Aufgabe gemacht, ein Dämpfungsglied anzugeben, das sehr kompakt ist, eine elektronische Einstellung der Dämpfung über einen möglichst großen Bereich ermöglicht und auf einem einzigen Chip realisierbar ist.

Dämpfungsgliedern liegt darin, dass die Dämpfung automatisch oder zumindest aus der Ferne eingestellt werden kann. Die vorhandenen Dämpfungsglieder sind relativ voluminös, sie sind nicht wirtschaftlich einsetzbar.

Hier setzt die Erfindung ein. Sie hatte es sich zur Aufgabe gemacht, ein Dämpfungsglied anzugeben, das sehr kompakt ist, eine elektronische Einstellung der Dämpfung über einen möglichst großen Bereich ermöglicht und auf einem einzigen Chip realisierbar ist.

Diese Aufgabe wird gelöst durch das Dämpfungsglied mit den Merkmalen des Anspruchs 1. Sie wird weiterhin gelöst, durch ein Verfahren zur Herstellung eines derartigen Dämpfungsgliedes mit den Merkmalen des Anspruchs 10.

Das erfindungsgemäße variable optische Dämpfungsglied ist auf einem Chip realisiert, konkret auf einem SiO2-Chip. Es nutzt die sogenannte Pauli-Blockierung in Graphen. Danach sind dann, wenn das chemische Potential in Graphen bei 0 eV liegt, Zwischenbandübergänge erlaubt, so dass Graphen im Absorptionszustand ist. Durch Erhöhung des chemischen Potentials über die Hälfte der Photonenenergie (z.B. 0,726 eV bei 855 nm Wellenlänge) werden die Zwischenbandübergänge blockiert und Graphen tritt in den transparenten Zustand ein.

Bei den realisierten Dämpfungsgliedern wurde festgestellt, dass die optische Dämpfung 0,023 dB / µm bei -3 V bei einem Einfügungsverlust von nur 0,00525 dB / µm betrug. Das erfindungsgemäße Dämpfungsglied ist ausgesprochen klein.

Vorzugsweise ist das Trägersubstrat SiO2. Das Material des Wellenleiters ist vorzugsweise Si3N4. Vorzugsweise sind die Elektroden metallisch, insbesondere sind sie aus Nickel gefertigt.

Ein Ausführungsbeispiel der Erfindung wird im Folgenden unter Bezugnahme auf die Zeichnung näher beschrieben, es ist nicht einschränkend zu verstehen. In der Zeichnung zeigen
- Fig. 1: eine Draufsicht auf das optische Dämpfungsglied,
- Fig. 2: einen Schnitt entlang der Schnittebene II-II in Figur 1,
- Fig. 3: eine isometrische Darstellung eines Stückes des optischen Dämpfungsgliedes, ausgehend von dem Schnitt gemäß Figur 2, und
- Fig. 4: eine Kennlinie des optischen Dämpfungsgliedes, dargestellt ist die optische Abschwächung in dB über der angelegten Gate-Spannung Vgate.

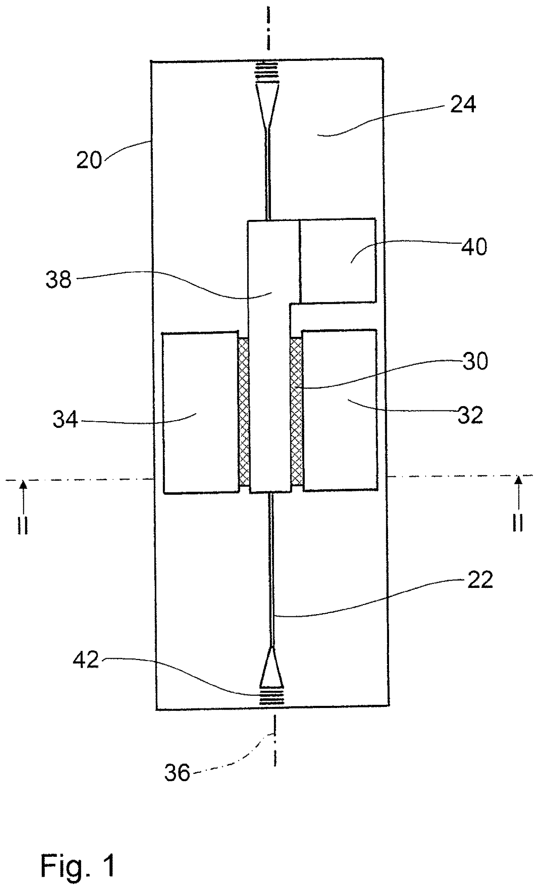

Aus den Figuren 1 bis 3 ist ein Trägersubstrat 20 zu erkennen, das eine Dicke von etwa 800 nm, eine Breite von etwa 3,6 µm und eine Länge von etwa 10 µm hat. Größere Abmessungen sind möglich. Auf der Oberseite des Trägersubstrats 20 ist ein Wellenleiter 22 angeordnet, er hat eine Breite von etwa 800 nm. Er ist aus Si3N4 gefertigt und mit dem Trägersubstrat 20 verbunden. Im praktischen Betrieb ist er ausgelegt für Licht im nahen Infrarot, beispielsweise 855 nm. Er ist auf der Längsmitte des Trägersubstrats 20 angeordnet und erstreckt sich praktisch über die gesamte Längenabmessung des Trägersubstrats 20. Er verläuft geradlinig.

Oberhalb des Trägersubstrats 20 und des Wellenleiters 22 ist eine Zwischenschicht 24 deponiert, sie besteht aus einer unteren Schicht 26 und einer oberen Schicht 28. Die untere Schicht 26 besteht aus Hydrogensilsesquioxan (HSQ). Sie hat eine Dicke von ca. 20 nm oberhalb des Wellenleiters 20. Die obere Schicht 28 besteht aus einem hydrophilen Material, beispielsweise Al2O3. Sie hat eine Dicke von ca. 5 nm an der gleichen Stelle. Auf der oberen Schicht 28 befindet sich eine Lage 30 einschichtiges Graphen. Insgesamt hat damit die Zwischenschicht 24 eine Dicke von etwa 25 nm zwischen Wellenleiter 20 und der Lage 30. Dieser Wert liegt deutlich unter der o.g. Wellenlänge von 855 nm, er ist kleiner als 3 % dieser Wellenlänge. Derartig kleine Werte sind erwünscht, damit sich die Lage 30 im evaneszenten Feld der durch den Wellenleiter 22 geleiteten elektromagnetischen Strahlung befindet. Es handelt sich hierbei um einen Effekt, der durch die Quantentheorie beschrieben ist.

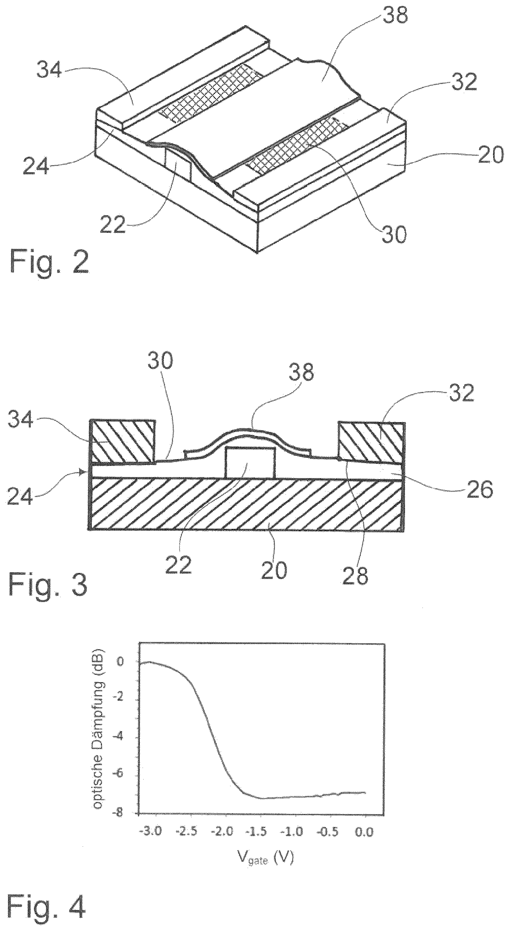

Die Zwischenschicht 24 bedeckt die Oberfläche des Trägersubstrats 20 mit Ausnahme des schmalen Streifens, der durch den Wellenleiter 22 abgedeckt ist. Die Zwischenschicht 24 bedeckt die Oberseite und die Seitenflächen des Wellenleiters 22. Die Zwischenschicht 24 hüllt zusammen mit dem Trägersubstrat 20 den Wellenleiter 22 ein, siehe Figuren 2 und 3.

Die Lage 30 einschichtiges Graphen ist kürzer als die Längenabmessung des Trägersubstrats 20. Sie ist an ihren beiden seitlichen Endbereichen, quer zur Längsrichtung gesehen, elektrisch kontaktiert. Hierzu sind eine Drain-Elektrode 32 und eine Source-Elektrode 34 auf der Zwischenschicht 24 angeordnet. Sie sind aus Nickel gefertigt. Sie liegen einander in Bezug auf eine Längsmittellinie 36, die dem Verlauf des Wellenleiters 22 folgt, spiegelsymmetrisch gegenüber. In der konkreten Ausbildung grenzen die beiden Elektroden 32, 34 an den Rand des Trägersubstrats 20. Jede Elektrode 32, 34 hat einen Abstand vom Wellenleiter 22, der größer ist als die Breite des Wellenleiters 22.

Auf der Lage 30 Graphen befindet sich eine Flüssigkeitsschicht 38 einer ionischen Flüssigkeit. Die ionische Flüssigkeit kann den ganzen Chip bedecken. In den Figuren 2 und 3 ist gezeigt, dass der Wellenleiter 22 abgedeckt wird, dies ist für die Funktion wichtig. Die ionische Flüssigkeit muss sich zumindest dort befinden, wo das evaneszente Feld zu erwarten ist.

Die Flüssigkeitsschicht 38 ist elektrisch mit einer Gate-Elektrode 40 verbunden. Diese befindet sich in Längsrichtung gegenüber einer der Elektroden 32 oder 34 versetzt auf der Zwischenschicht 24. Auch die Gate-Elektrode 40 ist aus Nickel gefertigt.

In Längsrichtung geht der Wellenleiter 22 an seinen Enden in jeweils einen Gitterkoppler 42 über. Diese Gitterkoppler 42 befinden sich vor bzw. hinter den beschriebenen Elektroden 32, 34 und 40 und vorzugsweise in einem Abstand von mindestens 50 nm von diesen. Die Gitterkoppler 42 sind nach dem Stand der Technik ausgebildet.

Das variable optische Dämpfungsglied kann wie folgt hergestellt werden: Zunächst wird das Trägersubstrat 20 aus SiO2 erstellt. Auf diesem wird der Wellenleiter 22 aus Si3Ni4 und mit einem i-line-Stepper mit anschließender Trockenätzung definiert. Er wird in einer Breite von 800 nm ausgeführt.

An den Enden des Wellenleiters 22 werden die Gitterkoppler 42 ausgebildet, sie sind optimiert für TE-polarisierte Laser der Wellenlänge 855 nm. Sie dienen dazu, Laserlicht in und aus dem Wellenleiter zu koppeln. Diese Gitterkoppler 42 werden mit E-Strahl-Lithographie definiert. Der Einfügungsverlust eines Gitterkopplers 42 beträgt 8 dB.

In diesem Stadium der Herstellung kann der optische Ausbreitungsverlust in dem Si3Ni4-Wellenleiter unter Verwendung des Übertragungslängenverfahrens (TLM) gemessen werden. Es wurden typische Werte von 2 dB / cm festgestellt.

Danach wird die Zwischenschicht 24 aufgebracht. Es wird zunächst für die untere Schicht 26 Wasserstoffsilsesquioxan (HSQ) auf das mit dem Wellenleiter 22 versehene Trägersubstrat 20 aufgeschleudert und bei 350 °C im O2-Plasma thermisch gehärtet. Die Zwischenschicht 24 aus HSQ hat eine Dicke von etwa 20 nm. Auf dieser unteren Schicht 26 wird dann als zweiter Teil der Zwischenschicht 24 als obere Schicht 28 eine hydrophile Schicht aus Al2O3 aufgebracht. Sie hat eine Dicke von etwa 5 nm.

Die Zwischenschicht 24 dient u.a. dazu, die Stufenkanten des Wellenleiters 22 zu glätten, um so ein Reißen der anschließend aufgebrachten Lage 30 aus Graphen zu vermeiden. Die Figuren 2 und 3 zeigen die Glättung der Stufenkanten des Wellenleiters 22 durch die Zwischenschicht 24. Die obere Schicht 28 erleichtert ein präzises Aufbringen der Lage 30.

Im nächsten Schritt wird unter Verwendung des Standard-PMMA-Verfahrens CVD-gewachsenes einschichtiges Graphen auf die Al2O3-Schicht übertragen.

Das so erhaltene Produkt wird dann auf eine Temperatur von 180 °C, die oberhalb der Schmelztemperatur von PMMA liegt, für 15 min erhitzt. Als nächstes wird das PMMA in Aceton bei Raumtemperatur gelöst. Danach wird die Lage 30 aus Graphen auf dem Wellenleiter 22 auf Längen von 200 µm bis 700 µm in Schritten von 100 µm (in Richtung der Längsmittellinie 36 gesehen) unter Verwendung von optischer Photolithographie und O2-Plasma gemustert und damit die Lage 30 fertiggestellt. Die größer die Länge ist, umso größer ist die erzielbare Dämpfung, siehe unten.

Danach werden Ni-Kontakte zur Lage 30 aus Graphen durch Sputterabscheidung mittels optischer Photolithographie und Abhebetechnik hergestellt. Zur Erzielung von Dotierungsniveaus in der Graphenschicht über 0,726 eV wird als Flüssigkeitsschicht 38 1-Ethyl-3-methylimidazolium-bis(trifluormethylsulfonyl)imid (EMIM: TFSI) auf die so erhaltene Probe aufgeschleudert. Sie wirkt als ionisches Flüssigkeitsgate.

Aus Figur 4 ist die erreichte optische Dämpfung in Abhängigkeit von der angelegten Spannung ersichtlich. Die Dämpfung kann um 7dB variiert werden, wenn Vgate von 0 bis -3V verändert wird. Bei 0 V liegt das Graphen im Absorptionszustand und die Transmission durch das Dämpfungsglied ist minimal. Für den Absorptionszustand sind Zwischenbandübergänge in Graphen verantwortlich und daher werden Photonen absorbiert. Eine Erhöhung der Spannung auf -2,25 V bewirkt, dass die Fermi-Energie von Graphen auf 0,726 eV (die Hälfte der 855 nm-Wellenlänge) verschoben wird und daher Graphen in den transparenten Zustand übergeht. Durch weiteres Verringern der Spannung auf - 3V wird Graphen vollständig transparent und die Transmission durch Dämpfungsglied ist maximal. Die dargestellten Werte für die Dämpfung wurden mit einer Länge der Lage 30 von 300 µm erreicht. Bei einer Länge der Lage 30 von 700 µm wird eine Gesamtdämpfung von 16 dB erreicht. Die Dämpfung ist mit der Länge der Lage 30 über den Proportionalitätsfaktor 0,02357 dB/µm verknüpft.

Es ist möglich, auf eine der Elektroden 32 oder 34 zu verzichten.

Das variable optische Dämpfungsglied hat ein Trägersubstrat 20, einen auf diesem ausgebildeten optischen Wellenleiter 22, eine zumindest momomolekulare Lage 30 Graphen, die sich oberhalb des Wellenleiters 22 befindet, eine Source-Elektrode 34, die mit der Lage 30 Graphen elektrisch verbunden ist und sich auf einer Seite des Wellenleiters 22 auf dem Trägersubstrat 20 befindet, eine Drain-Elektrode 32, die mit der Lage 30 Graphen elektrisch verbunden ist und sich auf einer der Source-Elektrode 34 gegenüber liegenden Seite des Wellenleiters 22 und auf dem Trägersubstrat 20 befindet, und eine Flüssigkeitsschicht 38 aus einer ionischen Flüssigkeit, die sich auf der Lage 30 befindet.

### Hinweis auf Förderung

Das Projekt, das zu diesem Antrag geführt hat, wurde im Rahmen der Finanzhilfevereinbarung Nr. 649953 und der entsprechenden Teilprojekte aus dem Forschungs- und Innovationsprogramm "Horizont 2020" der Europäischen Union finanziert.

### Bezugszeichenliste

- 20: Trägersubstrat
- 22: Wellenleiter
- 24: Zwischenschicht
- 26: untere Schicht
- 28: obere Schicht
- 30: Lage
- 32: Drain-Elektrode
- 34: Source-Elektrode
- 36: Längsmittelebene
- 38: Flüssigkeitsschicht
- 40: Gate-Elektrode
- 42: Gitterkoppler

## Patentansprüche

1. Variables optisches Dämpfungsglied
- mit einem Trägersubstrat (20),
- mit einem auf diesem Trägersubstrat (20) ausgebildeten optischen Wellenleiter (22),
- mit einer zumindest monomolekularen Lage (30) Graphen, die sich oberhalb des Wellenleiters (22) befindet,
- mit einer Source-Elektrode (34), die mit der Lage (30) Graphen elektrisch verbunden ist und sich auf einer Seite des Wellenleiters (22) auf dem Trägersubstrat (20) befindet,
- mit einer Drain-Elektrode (32), die mit der Lage (30) Graphen elektrisch verbunden ist und sich auf einer der Source-Elektrode (34) gegenüber liegenden Seite des Wellenleiters (22) und auf dem Trägersubstrat (20) befindet, und
- mit einer Gate-Elektrode (40), die sich auf dem Trägersubstrat (20) befindet und auf der Oberseite der Lage (30) Graphen und oberhalb des Wellenleiters (22) angeordnet ist,
wobei sich auf der Lage (30) Graphen eine Flüssigkeitsschicht (38) aus einer ionischen Flüssigkeit befindet, wobei sich die Flüssigkeitsschicht (38) nicht in direktem Kontakt zu der Drain-Elektrode (32) und der Source-Elektrode (34) befindet und wobei die Gate-Elektrode (40) mit der ionischen Flüssigkeit in elektrischer Verbindung ist.

2. Variables optisches Dämpfungsglied nach Anspruch 1, **dadurch gekennzeichnet, dass** sich zwischen dem Wellenleiter (22) und der Lage (30) Graphen eine Zwischenschicht (24) befindet.

3. Variables optisches Dämpfungsglied nach Anspruch 2, **dadurch gekennzeichnet, dass** die Dicke der Zwischenschicht (24) kleiner als 5 %, insbesondere kleiner als 3 % der Wellenlänge des durch den optischen Wellenleiter (22) laufenden Lichts ist.

4. Variables optisches Dämpfungsglied nach Anspruch 2 oder 3, **dadurch gekennzeichnet, dass** die Zwischenschicht (24) mindestens eine hydrophile obere Schicht (28), insbesondere eine Al2O3-Schicht aufweist, und dass vorzugsweise diese hydrophile obere Schicht (28) an die Lage (30) Graphen angrenzt.

5. Variables optisches Dämpfungsglied nach einem der Ansprüche Anspruch 2 bis 4, **dadurch gekennzeichnet, dass** die Zwischenschicht (24) Hydrogensilsesquioxan (HSQ) aufweist, das in direktem Kontakt mit dem Trägersubstrat (20) ist.

6. Variables optisches Dämpfungsglied nach einem der Ansprüche Anspruch 2 bis 5, **dadurch gekennzeichnet, dass** die Zwischenschicht (24) oberhalb des Wellenleiters (22) eine Dicke hat, die kleiner als 40 nm, insbesondere kleiner als 30 nm ist und vorzugsweise maximal 25 nm beträgt.

7. Variables optisches Dämpfungsglied nach einem der Ansprüche 2 bis 6, **dadurch gekennzeichnet, dass** die Lage (30) Graphen eine Bindungsebene aufweist, die in der Oberseite der Zwischenschicht (24) liegt und im Wesentlichen parallel zur Oberseite des Wellenleiters (22) ist.

8. Variables optisches Dämpfungsglied nach einem der vorangegangenen Ansprüche, **dadurch gekennzeichnet, dass** der Wellenleiter (22) Endbereiche aufweist, und dass die Endbereiche als Gitterkoppler (42) ausgebildet sind, die sich auf dem Trägersubstrat (20) befinden.

9. Variables optisches Dämpfungsglied nach einem der vorangegangenen Ansprüche, **dadurch gekennzeichnet, dass** die Lage (30) Graphen eine Erstreckung in Längsrichtung des Wellenleiters (22) hat, die im Bereich von 100 bis 1000 Mikrometer, insbesondere 200 bis 700 Mikrometer liegt.

10. Verfahren zur Herstellung eines variablen optischen Dämpfungsglieds nach einem der vorangegangenen Ansprüche mit folgenden Verfahrensschritten:
a) Erstellen eines Trägersubstrats (20), insbesondere aus SiO2,
b) Ausbilden eines Wellenleiters (22) auf diesem Trägersubstrat (20), vorzugsweise aus Si3Ni4,
c) auf das Trägersubstrat (20) und den darauf befindlichen Wellenleiter (22) wird eine Zwischenschicht (24) aufgebracht,
d) auf die Zwischenschicht (24) wird eine Lage (30) aus Graphen aufgebracht,
e) es werden eine Drain-Elektrode (32) und eine Source-Elektrode (34) auf dem Trägersubstrat (20) angeordnet und mit der Lage (30) Graphen elektrisch verbunden,
f) es wird eine Flüssigkeitsschicht (38) einer ionischen Flüssigkeit auf die Lage (30) aufgebracht, sie wird mit einer Gate-Elektrode (40) elektrisch verbunden, wobei sich die Flüssigkeitsschicht (38) nicht in direktem Kontakt zu der Drain-Elektrode (32) und der Source-Elektrode (34) befindet.

11. Verfahren nach Anspruch 10, **dadurch gekennzeichnet, dass** im Schritt c) die Zwischenschicht (24) in zwei Schritten aufgebracht wird, nämlich zunächst eine untere Schicht (26) aus Wasserstoffsilsesquioxan (HSQ) und danach eine obere Schicht (28) sich auf einem hydrophilen Material, vorzugsweise Al2O3.

12. Verfahren nach Anspruch 10 oder 11, **dadurch gekennzeichnet, dass** an den Enden des Wellenleiters (22) Gitterkoppler (42) ausgebildet werden.

## Claims

1. A variable optical attenuator
- having a carrier substrate (20),
- having an optical waveguide (22) formed on this carrier substrate (20),
- having an at least monomolecular (30) of graphene, which is situated above the waveguide (22),
- having a source electrode (34), which is electrically connected to the layer (30) of graphene and is situated on a side of the waveguide (22) on the carrier substrate (20),
- having a drain electrode (32), which is electrically connected to the layer (30) of graphene and is situated on a side of the waveguide (22) located opposite the source electrode (34) and on the carrier substrate (20), and
- having a gate electrode (40) which is situated on the carrier substrate (20) and is arranged on the top of the layer (30) of graphene and above the waveguide (22),
wherein a liquid layer (38) of an ionic liquid is situated on the layer (30) of graphene, wherein the liquid layer (38) is not in direct contact with the drain electrode (32) and the source electrode (34) and wherein the gate electrode (40) is electrically connected to the ionic liquid.

2. The variable optical attenuator according to Claim 1, **characterised in that** between the waveguide (22) and the layer (30) of graphene an intermediate layer (24) is situated.

3. The variable optical attenuator according to Claim 2, **characterised in that** the thickness of the intermediate layer (24) is less than 5%, in particular less than 3% of the wavelength of the light running through the optical waveguide (22).

4. The variable optical attenuator according to Claim 2 or 3, **characterised in that** the intermediate layer (24) comprises at least one hydrophile upper layer (28), in particular an Al₂O₃ layer, and **in that** preferentially this hydrophile upper layer (28) adjoins the layer (30) of graphene.

5. The variable optical attenuator according to any one of the Claims 2 to 4, **characterised in that** the intermediate layer (24) comprises hydrogen silsesquioxane (HSQ), which is in direct contact with the carrier substrate (20).

6. The variable optical attenuator according to any one of the Claims 2 to 5, **characterised in that** the intermediate layer (24) above the waveguide (22) has a thickness that is less than 40 nm, in particular less than 30 nm and preferentially maximally 25 nm.

7. The variable optical attenuator according to any one of the Claims 2 to 6, **characterised in that** the layer (30) of graphene comprises a binding plane, which lies in the top of the intermediate layer (24) and is substantially parallel to the top of the waveguide (22).

8. The variable optical attenuator according to any one of the preceding claims, **characterised in that** the waveguide (22) comprises end regions, and **in that** the end regions are formed as grating couplers (42), which are situated on the carrier substrate (20).

9. The variable optical attenuator according to any one of the preceding claims, **characterised in that** the layer (30) of graphene has an extent in the longitudinal direction of the waveguide (22) which is in the range from 100 to 1000 micrometre, in particular 200 to 700 micrometre.

10. A method for producing a variable optical attenuator according to any one of the preceding claims having the following method steps:
a) producing a carrier substrate (20), in particular of SiO₂,
b) forming a waveguide (22) on this carrier substrate (20), preferentially of Si₃Ni₄,
c) an intermediate layer (24) is applied onto the carrier substrate (20) and the waveguide (22) situated thereon,
d) a layer (30) of graphene is applied onto the intermediate layer (24),
e) a drain electrode (32) and a source electrode (34) are arranged on the carrier substrate (20) and electrically connected to the layer (30) of graphene,
f) a liquid layer (38) of an ionic liquid is applied onto the layer (30), which is electrically connected to a gate electrode (40), wherein the liquid layer (38) is not in direct contact with the drain electrode (32) and the source electrode (34).

11. The method according to Claim 10, **characterised in that** in step c) the intermediate layer (24) is applied in two steps, namely initially a lower layer (26) of hydrogen silsesquioxane (HSQ) and thereafter an upper layer (28) of a hydrophile material, preferentially Al2O3.

12. The method according to Claim 10 or 11, **characterised in that** at the ends of the waveguide (22) grating couplers (42) are formed.

## Revendications

1. Atténuateur optique variable
- comportant un substrat porteur (20),
- comportant un guide d'onde optique (22) formé sur ce substrat porteur (20),
- comportant une couche au moins monomoléculaire (30) de graphène, qui se situe au-dessus du guide d'onde (22),
- comportant une électrode de source (34) qui est connectée électriquement à la couche (30) de graphène et est située sur un côté du guide d'onde (22) sur le substrat porteur (20),
- comportant une électrode de drain (32), qui est connectée électriquement à la couche (30) de graphène et est située sur un côté du guide d'ondes (22) opposé à l'électrode de source (34) et sur le substrat porteur (20), et
- comportant une électrode de grille (40), qui est située sur le substrat porteur (20) et au-dessus de la couche de graphène (30) et au-dessus du guide d'ondes (22),
dans lequel se trouve une couche liquide (38) constituée d'un liquide ionique sur la couche (30) de graphène, dans lequel la couche liquide (38) n'est pas en contact direct avec l'électrode de drain (32) et l'électrode de source (34) et dans lequel l'électrode de grille (40) est en connexion électrique avec le liquide ionique.

2. Atténuateur optique variable selon la revendication 1, **caractérisé en ce qu'**une couche intermédiaire (24) se trouve entre le guide d'onde (22) et la couche de graphène (30).

3. Atténuateur optique variable selon la revendication 2, **caractérisé en ce que** l'épaisseur de la couche intermédiaire (24) est inférieure à 5%, notamment inférieure à 3% de la longueur d'onde de la lumière traversant le guide d'onde optique (22).

4. Atténuateur optique variable selon la revendication 2 ou 3, **caractérisé en ce que** la couche intermédiaire (24) présente au moins une couche supérieure hydrophile (28), notamment une couche A1203 et que de préférence cette couche supérieure hydrophile (28) est fixée à la couche (30) de graphène adjacente.

5. Atténuateur optique variable selon une des revendications 2 à 4, **caractérisé en ce que** la couche intermédiaire (24) comprend de l'hydrogène silsesquioxane (HSQ), qui est en contact direct avec le substrat porteur (20).

6. Atténuateur optique variable selon une des revendications 2 à 5, **caractérisé en ce que** la couche intermédiaire (24) au-dessus du guide d'onde (22) a une épaisseur inférieure à 40 nm, notamment inférieure à 30 nm et de préférence s'élève au maximum à 25 nm.

7. Atténuateur optique variable selon une des revendications 2 à 6, **caractérisé en ce que** la couche (30) de graphène présente un plan de liaison qui se situe dans la face supérieure de la couche intermédiaire (24) et est sensiblement parallèle à la face supérieure du guide d'onde (22).

8. Atténuateur optique variable selon une des revendications précédentes, **caractérisé en ce que** le guide d'onde (22) présente des zones d'extrémité et que les zones d'extrémité sont conçues sous forme de coupleurs à réseau (42), qui sont situés sur le substrat porteur (20).

9. Atténuateur optique variable selon une des revendications précédentes, **caractérisé en ce que** la couche (30) de graphène présente une extension dans la direction longitudinale du guide d'onde (22) qui est de l'ordre de 100 à 1000 micromètres, notamment 200 à 700 micromètres.

10. Procédé de fabrication d'un élément à atténuation optique variable selon une des revendications précédentes comportant les étapes de procédé suivantes :
a) création d'un substrat porteur (20), notamment en SiO2,
b) formation d'un guide d'onde (22) sur ce substrat porteur (20), de préférence en Si3Ni4,
c) une couche intermédiaire (24) est appliquée sur le substrat porteur (20) et sur le guide d'ondes (22),
d) une couche (30) en graphène est appliquée sur la couche intermédiaire (24),
e) une électrode de drain (32) et une électrode de source (34) sont disposées sur le substrat porteur (20) et connectées électriquement à la couche (30) de graphène,
f) une couche liquide (38) d'un liquide ionique est appliquée sur la couche (30), elle est connectée électriquement à une électrode de grille (40), dans lequel la couche liquide (38) n'est pas en contact direct avec l'électrode de drain (32) et l'électrode de source (34).

11. Procédé selon la revendication 10, **caractérisé en ce qu'**à l'étape c) la couche intermédiaire (24) est appliquée en deux étapes, à savoir d'abord une couche inférieure (26) en hydrogène silsesquioxane (HSQ) puis une couche supérieure (28) sur un matériau hydrophile, de préférence A1203.

12. Procédé selon la revendication 10 ou 11, **caractérisé en ce que** sur aux extrémités du guide d'onde (22) des coupleurs à réseau (42) sont formés.
